# EUROPEAN PATENT SPECIFICATION

(11) **EP 1 878 618 B1**
(45) Date of publication and mention of the grant of the patent: **12.05.2010**
(21) Application number: 07013028.1
(22) Date of filing: 03.07.2007
(51) Int. Cl.: B60R 11/04

(54) **Driving support method and apparatus**
Verfahren und Vorrichtung zur Fahrunterstützung
Procédé et appareil de support de conduite

(30) Priority: 12.07.2006 JP 2006192033
(43) Date of publication of application: 16.01.2008
(73) Proprietor: Aisin AW Co., Ltd., Fujii-cho Anjo-shi, Aichi 444-1192 (JP)
(72) Inventor: Kubota, Tomoki, Okazaki-shi Aichi 444-8564 (JP); Takagi, Minoru, Okazaki-shi Aichi 444-8564 (JP)
(74) Representative: Kramer - Barske - Schmidtchen

(56) References cited:
- EP-A- 1 285 814
- EP-A- 1 378 395
- US-A1- 2005 063 080
- US-A1- 2005 168 695

## Description

### BACKGROUND OF THE INVENTION

### 1. Field of the Invention

The present invention relates to a driving support method and apparatus.

### 2. Description of the Related Art

As as example of an apparatus supporting safe driving, an in-vehicle system for capturing an image of area which is hidden as a blind spot of a driver of the vehicle with an in-vehicle camera and displaying the image on a display monitor is known. As one such system, a system that captures an image of area which is hidden as a blind spot of a driver of a vehicle arising because of a presence of a front pillar in the vehicle with an in-vehicle camera and displays the image on an inner (medial) side of the front pillar has been suggested. The front pillar is located to each of the right and left front of the driver to support the front window and the roof of the vehicle and obstructs the driver's view. However, the front pillar needs to have a certain thickness to ensure the safety of the driver.

The system described above includes an in-vehicle camera, an image processor for processing an image signal which is output from the in-vehicle camera, a display which is attached on the inner side of the front pillar for displaying the image, and a projector for projecting the image on the inner surface of the front pillar. When using such a system, the driver may have a front view as if the front pillar were transparent and it may be possible for the driver to recognize a road shape and/or an obstacle in front side of the vehicle at an intersection that otherwise would not be possible. However, there are some problems still remaining concerning how to display images corresponding to the movement of the driver and how to display contiguous images as smooth as the driver's actual view.

An apparatus disclosed in Japanese Unexamined Patent Application Publication No. 2005-184225 captures images of areas surrounding a vehicle by in-vehicle cameras, the cameras being individually attached at right and left side mirrors, and projects the images on medial surfaces of front pillars of the vehicle. The apparatus further detects coordinates of eyes of a driver of the vehicle and corrects the images provided by the cameras on the basis of the positions of the eyes of the driver.

However, according to the apparatus described above, each image is generated on the basis of one camera, so that the generated image has a limited view area even if the apparatus detects the coordinates of the eyes of the driver and corrects the image on the basis of the coordinates. More specifically, for example, in case of a vehicle with righthand drive, the driver seated on the driver seat of the vehicle may see an obstacle located to the front and right of the vehicle if the driver leans forward to and peers at the area to the front and right of the vehicle through the front window. However, the driver may not see the obstacle while the driver has his/her back against the back of the seat (hereinafter, this position is referred to as "standard posture"). Further, even in case of an obstacle which can be recognized both when the driver leans forward and peers at the area in to the front and right of the vehicle and when the driver takes the standard posture, there is both a visible side and an invisible side of the obstacle, depending on the position of the driver. According to the apparatus described above, only 2D coordinates are used for the image processing and an entire obstacle or a side of an obstacle located out of the range of the camera may not be displayed. Therefore, when the driver has any posture other than the standard posture, the image displayed on the surface of the pillar may not be connected with the real view from the front window and the door window when viewed by the driver.

EP 1 285 814 A1 and EP 1 378 395 A1 each disclose an apparatus according to the preamble of claim 2.

### SUMMARY OF THE INVENTION

Accordingly, it is an object of the present invention to provide a driving support method and apparatus for displaying an image in correspondence with a driver's posture on a pillar of a vehicle.

a) To solve the problems described above, various exemplary implementations of the principles described herein provide a driving support method for capturing an image of area which is hidden as a blind spot of a driver of a vehicle arising because of a presence of a pillar of the vehicle using an imaging device which is attached on the vehicle and displaying the image provided by the imaging device on an inner side of the pillar, comprising: detecting a position of the driver who is seated on a driver's seat of the vehicle; selecting one of the imaging devices to capture an image among a plurality of the imaging devices which capture images of different areas in accordance with the position of the driver; and displaying an image on the inner side of the pillar on the basis of an image signal input from the selected imaging device.

b) Various exemplary implementations of the principles described herein provide a driving support apparatus for capturing an image of area which is hidden as a blind spot of a driver of a vehicle arising because of a presence of a pillar of the vehicle using an imaging device mounted on the vehicle and displaying the image provided by the imaging device on an inner side of the pillar, comprising: a detecting device for detecting a position of the driver who is seated on a driver's seat in the vehicle; a selecting device for selecting one of the imaging devices among a plurality of the imaging devices which capture images of different areas in accordance with the position of the driver; an image signal obtaining device for inputting an image signal from the selected imaging device; and an output control device for displaying an image of area which is hidden as a blind spot of the driver of the vehicle arising because of the presence of the pillar on the inner side of the pillar in the vehicle on the basis of the image signal which is input from the imaging device.

c) Various exemplary implementations of the principles described herein provide a driving support apparatus for capturing an image of area which is hidden as a blind spot of a driver of a vehicle arising because of a presence of a pillar of the vehicle using an imaging device mounted on the vehicle and displaying the image which is provided by the imaging device on an inner side of the pillar, comprising: a detecting device for detecting a position of the driver who is seated on a driver's seat in the vehicle; an angle calculating device for calculating an angle of the blind spot arising caused by the presence of the pillar on the basis of the position of the driver detected by the detecting device; a selecting device for selecting one of the imaging devices among a plurality of the imaging devices which capture images of different areas in accordance with the blind spot angle for the driver; an image signal obtaining device for inputting an image signal from the selected imaging device; and an output control device for displaying an image of the blind spot of the driver arising because of the presence of the pillar on the inner side of the pillar in the vehicle on the basis of the image signal which is input from the imaging device.

d) Various exemplary implementations of the principles described herein provide the driving support apparatus, wherein: the selecting device selects, provided that a maximum angle of the blind spot angle arising because of the presence of the pillar in a vehicle width direction is less than predetermined numbers of degrees relative to a horizontal axis, first imaging device to capture an image which mainly includes area in front of the vehicle, or selects, provided that the maximum angle is equal to or greater than the predetermined numbers of degrees, second imaging device to capture an image which mainly includes area in front of the vehicle.

e) Various exemplary implementations of the principles described herein provide the driving support apparatus, further comprising: an image processing device for performing image processing on an image signal input from the imaging device in accordance with the position of the driver.

According to an embodiment of the present invention, the position of the driver is detected and one imaging device is selected among a plurality of the imaging devices in accordance with the position of the driver. The image provided by the selected imaging device is displayed on the inner side of the pillar. Therefore, even if the driver changes his/her posture, an appropriate imaging device may be selected according to the position of the driver and the image displayed on the pillar may be smoothly connected with the real view from, for example, the front window when viewed from the driver.

According to an embodiment of the present invention, the driving support apparatus detects the position of the driver and selects one imaging device among a plurality of the imaging devices in accordance with the position of the driver. Then the image provided by the selected imaging device is displayed on the inner side of the pillar. Therefore, even if the driver changes his/her posture, an appropriate imaging device may be selected according to the position of the driver and the image displayed on the pillar may be smoothly connected with the real view from, for example, the front window when viewed from the driver.

According to an embodiment of the present invention, the driving support apparatus detects the position of the driver and calculates the blind spot angle arising because of the presence of the pillar in accordance with the position of the driver. Then an appropriate imaging device is selected according to the blind spot angle and the image provided by the selected imaging device is displayed on the inner side of the pillar. Therefore, even if the driver changes his/her posture, an appropriate imaging device may be selected according to the position of the driver and the image displayed on the pillar may be smoothly connected with the real view from, for example, the front window when viewed from the driver.

According to an embodiment of the present invention, when the maximum blind spot angle is less than predetermined numbers of degrees on the basis of the horizontal axis, the first imaging device which captures an image mainly including the front side area of the vehicle is selected. When the maximum blind spot angle is equal to or greater than predetermined numbers of degrees, the second imaging device which captures an image mainly including the area in front of the vehicle is selected. That is, when the blind spot angle faces about right/left forward, the first imaging device which captures the image mainly including the front side area of the vehicle is selected and when the blind spot angle faces forward, the second imaging device which captures the image mainly including the area in front of the vehicle is selected. Therefore, even if the driver changes his/her posture, an appropriate imaging device may be selected according to the position of the driver and the image displayed on the pillar may be smoothly connected with the real view from, for example, the front window when viewed from the driver.

According to an embodiment of the present invention, the detecting device detects coordinates of the head of the driver, so that it may be relatively possible to specify the accurate posture of the driver.

According to an embodiment of the present invention, it is not only to select the appropriate imaging device in accordance with the position of the driver but also to perform imaging processing against image signals input from the first imaging device or the second imaging device in accordance with the position of the driver. Therefore, the image displayed on the pillar may connect with the real view when viewed from the driver.

Further features and advantages follow from the following description of embodiments referring to the drawings.

### BRIEF DESCRIPTION OF THE DRAWINGS

FIG. 1 is a block diagram showing a driving support system of a current embodiment.

FIG. 2 is a diagram showing a range of a first camera.

FIG. 3 is a diagram showing a range of a second camera.

FIG. 4 is a diagram showing positions of a projector and a pillar.

FIG. 5 is a diagram showing an inner side view of the pillar.

FIG. 6 is a diagram showing a mask pattern.

FIG. 7 is a diagram showing a side view of a sensor.

FIG. 8 is a diagram showing an upper side view of the sensor.

FIG. 9 is a diagram showing a horizontal blind spot of a driver when the driver's head leans to forward and to right.

FIG. 10 is a diagram showing a vertical blind spot of the driver when the driver's head leans to forward and to right.

FIG. 11 is a diagram showing a horizontal blind spot of the driver when the driver's head leans to backward and to right.

FIG. 12 is a diagram showing a vertical blind spot of the driver when the driver's head leans to backward and to right.

FIG. 13 is a diagram showing a horizontal blind spot of the driver when the driver's head leans to forward and to left.

FIG. 14 is a diagram showing a horizontal blind spot of the driver when the driver's head leans to backward and to left.

FIG. 15 is a diagram showing procedures in the current embodiment.

FIG. 16 is a diagram showing an image projected on the pillar.

FIG. 17 is a diagram showing an image projected on the pillar.

### DESCRIPTION OF THE PREFERRED EMBODIMENTS

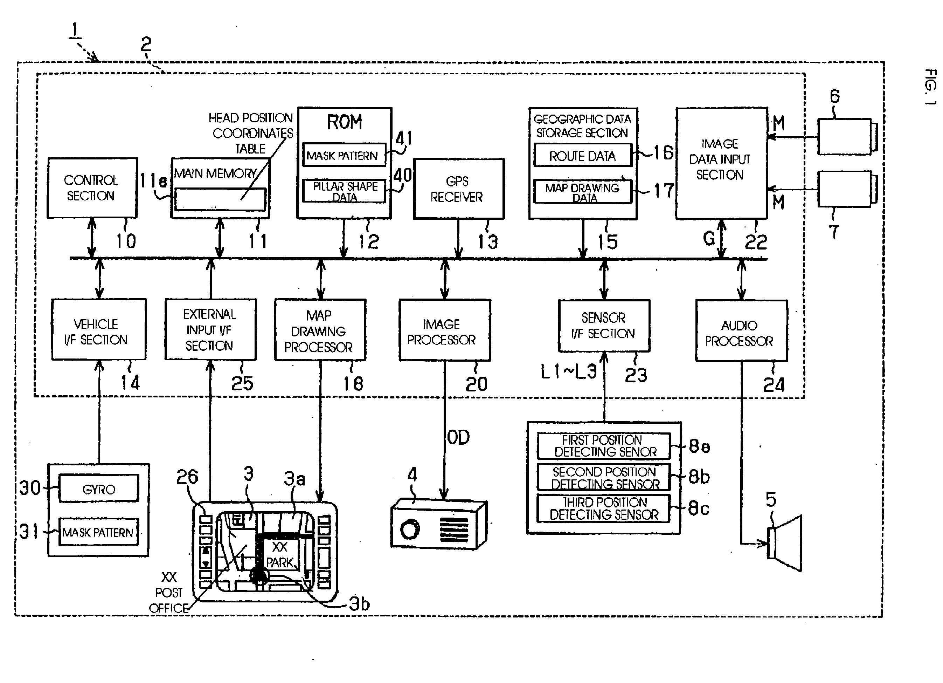

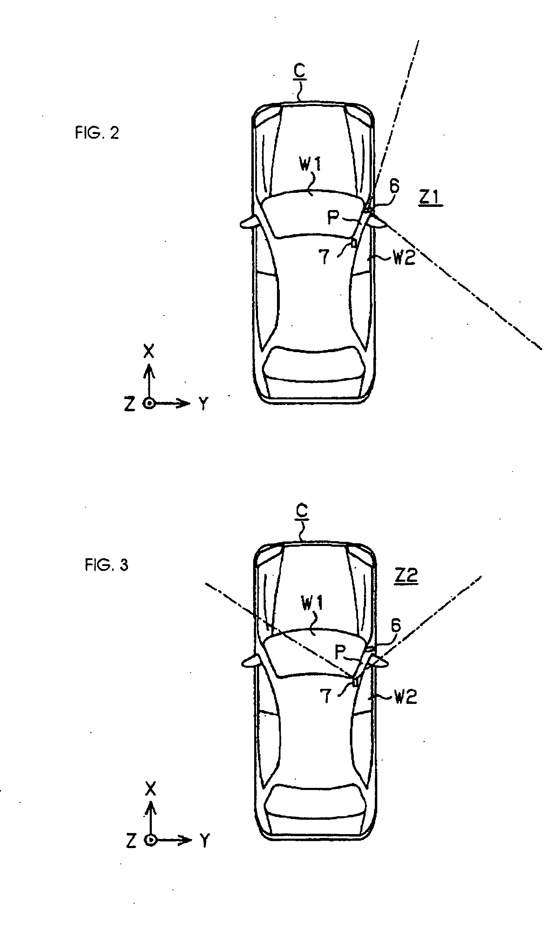

An embodiment of the present invention will be described with reference to FIGs. 1 through 17 below. FIG. 1 is a block diagram showing a structure of a driving support system 1 installed in a vehicle. The driving support system 1 is installed in a vehicle C (in FIG. 2) and may include a driving support unit 2 as a driving support device, a display 3 as a display device, a projector 4, a speaker 5, a first camera 6 and a second camera 7 as imaging devices, and first through third position detecting sensors 8a through 8c.

The driving support unit 2 may include a control section 10 as a detecting device, a selecting device, and an angle calculating device, a nonvolatile main memory 11, a ROM 12, and a GPS receiver 13. The control section 10 is, for example, a CPU, an MPU, or an ASIC, and mainly controls various processing operations on the basis of a driving support program stored in the ROM 12. The main memory 11 temporarily stores a calculation result output by the control section 10.

The control section 10 inputs a position detection signal indicating coordinates such as latitude/longitude, which is generated by a GPS satellite and received by the GPS receiver 13, and calculates an absolute position of the vehicle in which the driving support system is installed by means of electronic navigation. The control section 10 further inputs a vehicle speed pulse and an angular velocity calculated by a vehicle speed sensor 30 and a gyro 31, both of which are attached on the vehicle, through a vehicle I/F section 14 of the driving support unit 2. The control section 10 calculates a relative position on the basis of an origin position by means of autonomous navigation using the vehicle speed pulse and the angular velocity and specifies the current vehicle position on the basis of the relative position calculated by autonomous navigation and the absolute position calculated by electronic navigation.

The driving support unit 2 may include a geographic data storage section 15. The geographic data storage section 15 is an internal hard disk or an external storage device such as an optical disk. In the geographic data storage section 15, route network data as map data for searching for a route to a destination (hereinafter referred to as route data 16) and map drawing data 17 for outputting a map screen 3a on the display 3 are stored.

The route data 16 is data regarding roads within areas divided into a mesh grid according to a national map. The route data 16 may include, for example, a mesh ID as an identifier of each mesh, a link ID as an identifier of each link in the mesh, and a link cost. The control section 10 searches for a recommended route to a destination using route data 16 and determines whether the vehicle C approaches a point for which guidance is to be given such as an intersection.

As used herein, the term "link" refers to, for example, a road or portion of a road. For example, each road may consist of a plurality of componential units called links. Each link may be separated and defined by, for example, an intersection, an intersection having more than three roads, a curve, a highway entry point, and/or a point at which the road type changes.

The map drawing data 17 is data used when a road shape and/or a view from the driver is drawn and stored by each mesh which a map is divided into according to the national map. The control section 10 determines whether there is a curve whose curvature is equal to or greater than a predetermined value in front of the vehicle C on the basis of road shape data included in the map drawing data 17.

As shown in FIG. 1, the driving support unit 2 may include a map drawing processor 18. The map drawing processor 18 reads out the map drawing data 17 from the map data storage section 15 to draw a map of an area surrounding the vehicle C. The map drawing processor 18 further generates data for outputting the map and temporarily stores the data in a VRAM (not shown). The map drawing processor 18 outputs image signals on the basis of the generated data for outputting the map on the display 3 and displays a map screen 3a as shown in FIG. 1. The map drawing processor 18 further overlaps a vehicle position indicator 3b indicating the position of the vehicle C on the map screen 3a.

The driving support unit 2 may include an audio processor 24. The audio processor 24 has an audio file (not shown) and outputs, for example, audio guidance for the route to the destination from the speaker 5. The driving support unit 2 may further include an external input I/F section 25. The external input I/F section 25 inputs an input signal which is generated by input of an operation switch 26 located next to the display 3 and/or the display 3 which is a touch panel operated by a user and outputs the signal to the control section 10.

The driving support unit 2 may further include an image data input section 22 as an image signal obtaining device and an image processor 20 for inputting image data G from the image data input section 22 as an output control device and an image processing device. The image data input section 22 activates the first camera 6 or the second camera 7, both of which are attached on the vehicle C, and inputs an image signal M provided by the first camera 6 or the second camera 7 in a controlled environment by the control section 10.

The first camera 6 is a color digital camera which has an optical system including a lens (not shown), a mirror, etc. and a CCD image sensor (not shown). As shown in FIG. 2, the first camera 6 is attached on an outer lower side of a right front pillar of the vehicle C (hereinafter referred to as pillar P) and whose optical axis points to an area to the front and right of the vehicle C. According to the current embodiment, the vehicle C is righthand drive, so that the first camera 6 is attached on the right side (the driver seat side) of the vehicle C. The first camera 6 takes a picture of a region Z1 which includes the area to the front and right of the vehicle C and a part of the right side body of the vehicle C.

The second camera 7 has the same structure as the first camera 6. As shown in FIG. 3, the second camera 7 is attached on the outer upper side of the pillar P. More specifically, the first camera 6 and the second camera 7 are attached on the both ends of the pillar P, which is inclined, so that the positions of the two cameras are different from each other in any direction which is a vehicle length direction parallel to a shaft of the vehicle C (X-direction in FIG. 3), a vehicle width direction (Y-direction in FIG. 3) or a vertical direction (Z-direction in FIG 3). The second camera 7 is located behind the first camera 6 in the length direction (X-direction) and takes a picture of a region Z2 which is mainly the area in front of the vehicle C. Therefore, the first camera 6 takes a picture of an area positioned further to the right of the vehicle C than the second camera 7 does. As a result, an obstacle which is located to the front and right of the vehicle C may be easier to enter the range of the first camera 6 than the range of the second camera 7.

The image signal M provided by the first camera 6 or the second camera 7 is digitalized and converted into image data G by the image data input section 22. The image data G is output to the image processor 20. The image processor 20 processes image data G and outputs the processed image data G on the projector 4.

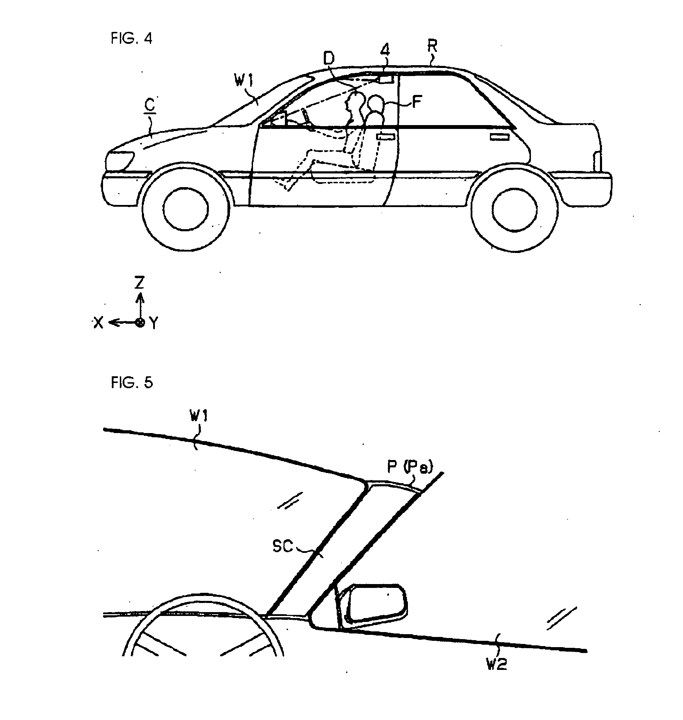

As shown in FIG. 4, the projector 4 is attached on the inner side of a roof R and in the upper side direction of a front seat F on which a driver D is seated. The projector 4 may project an image on the surface of the right pillar P of the vehicle C (FIG. 5). As shown in FIG. 5, a screen SC which is cut in accordance with the shape of the pillar P is attached on the inner side Pa of the pillar P. The focus of the projector 4 is adjusted for the screen SC. Note that, if a projected light may be received and a clear image may be displayed directly on the inner side Pa of the pillar P in accordance with the material and the shape of the inner side Pa, the screen SC may not be used.

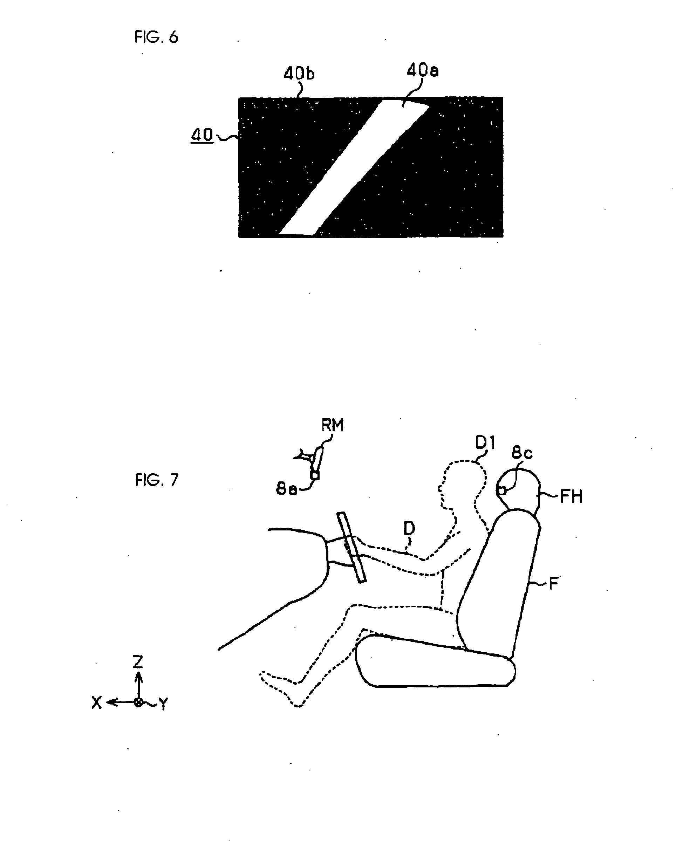

As shown in FIG. 1, a mask pattern 40 and pillar shape data 41 are stored in the ROM 12 of the driving support unit 2 in advance during the process for manufacturing the unit. As shown in FIG. 6, the mask pattern 40 is data for masking image data G and includes an image display section 40a whose shape extends along the shape of the inner side of the pillar P and a mask 40b. The image processor 20 uses pixel data of image data G which is provided by the first camera 6 or the second camera 7 for generating output data OD for the image display section 40a. Meanwhile, according to the mask 40b, the image processor 20 uses pixel data provided by the projector 4 but not for displaying and generates output data OD. The image processor 20 outputs two of the output data OD to the projector 4. As a result, an image is projected only on the screen SC on the pillar P. Any image is not projected on the other area surrounding the screen SC such as the front window W1 or the door window W2 because of the mask 40b.

Pillar shape data 41 is data including a pattern or coordinates according to the outline of the pillar and each vehicle C has own data. The control section 10 may obtain 3D coordinates (X, Y, Z), which are the length direction, the vehicle width direction, and the vertical direction, of the outline of the pillar P on the basis of pillar shape data 41. Further, the control section 10 may obtain 3D coordinate data of the width and/or the length of the pillar P.

As shown in FIG. 1, the driving support unit 2 may include a sensor I/F section 23 as a detecting device. The sensor I/F section 23 inputs detecting signals from the first through third position detecting sensors 8a through 8c. The first through third position detecting sensors 8a through 8c are ultrasonic sensors and are attached in the vehicle C, especially the area surrounding the driver D being seated on the front seat F. The first position detecting sensor 8a is attached near a room mirror (front mirror) RM and at about equal level to or a little higher level of a head D1 of the driver D.

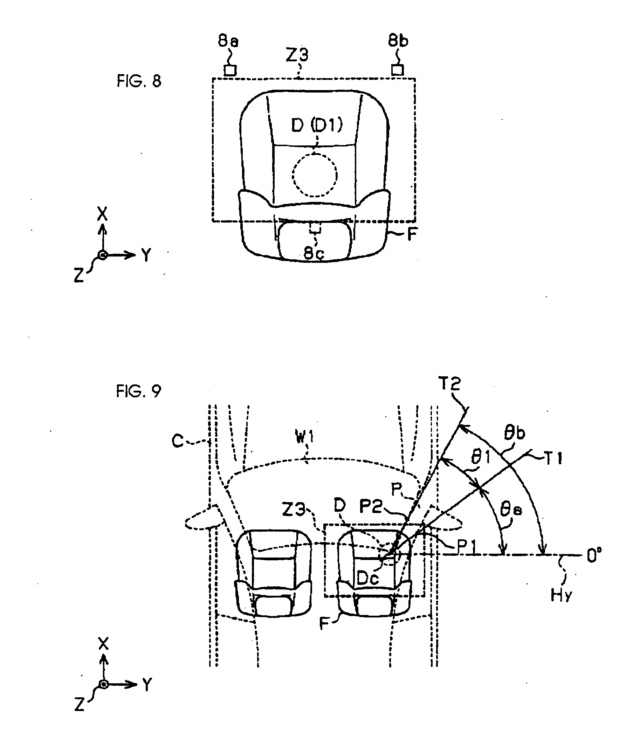

As shown in FIG. 8, the second position detecting sensor 8b is attached on the upper side of the door window W2 (FIG. 5) and that is the upper right of the driver D. According to the current embodiment, the second position detecting sensor 8b is located at about the same level of the first position detecting sensor 8a on the length direction (X-direction).

As shown in FIG. 7, the third position detecting sensor 8c is embedded with a head rest FH of the front seat F. The third position detecting sensor 8c is located lower than the first and second position detecting sensors 8a and 8b on the vertical direction (Z-direction). Further, as shown in FIG. 8, the third position detecting sensor 8c is located between the first position detecting sensor 8a and the second position detecting sensor 8b on the vehicle width direction (Y-direction) and behind both of the first and second position detecting sensors 8a and 8b on the length direction (X-direction in FIG. 8).

Each sensor head (not shown) of the position detecting sensors 8a through 8c emits ultrasonic waves and the ultrasonic waves are reflected on the head position D1 of the driver D. Each position detecting sensors 8a through 8c times from emitting ultrasonic waves to receiving the reflected waves and calculates relative distances L1 through L3 which are between each position detecting sensor to the head position D1 on the basis of calculated times. The relative distances L1 through L3 are output to the control section 10 through the sensor I/F section 23. Note that, the sensor I/F section 23 may calculate the relative distances L1 through L3 between each position detecting sensor to the head position D1 instead of each position detecting sensor on the basis of signals from the position detecting sensors 8a through 8c.

As shown in FIG. 1, a head position coordinates table 11a used for calculating coordinates of a center point Dc of the head position D1 is stored in the nonvolatile main memory 11. The head position coordinates table 11 a links the standard coordinates of the center points Dc of the head position D1 to the relative distances L1 through L3 which are distances between each of the first through third position detecting sensors 8a through 8c and the head position D1 of the driver D. More specifically, a head moving range Z3 (FIG. 8), the range is on the basis of both of the range within the first through third position detecting sensors 8a through 8c's detection and the range in which the head position D1 of the driver D may be moved provided that the driver who has a standard proportion is seated on the driver seat, is preset. According to the head moving range Z3, certain patterns of combinations of the relative distances L1 through L3 which are detected by the first through third position detecting sensors 8a through 8c and the coordinates of the center points Dc of the head D1 are developed, so that the coordinates of the center point Dc of the head D1 may be obtained by referring the head position coordinates table 11a with the relative distances L1 through L3. Note that, a plurality of tables corresponding to body types of drivers may be stored as the head position coordinates table 11 a. Further, body shape data of the driver D such as a seated height and/or an eye level, may be registered in the driving support unit 2 in advance and the control section 10 may generate the head position coordinates table 11a on the basis of the registered data.

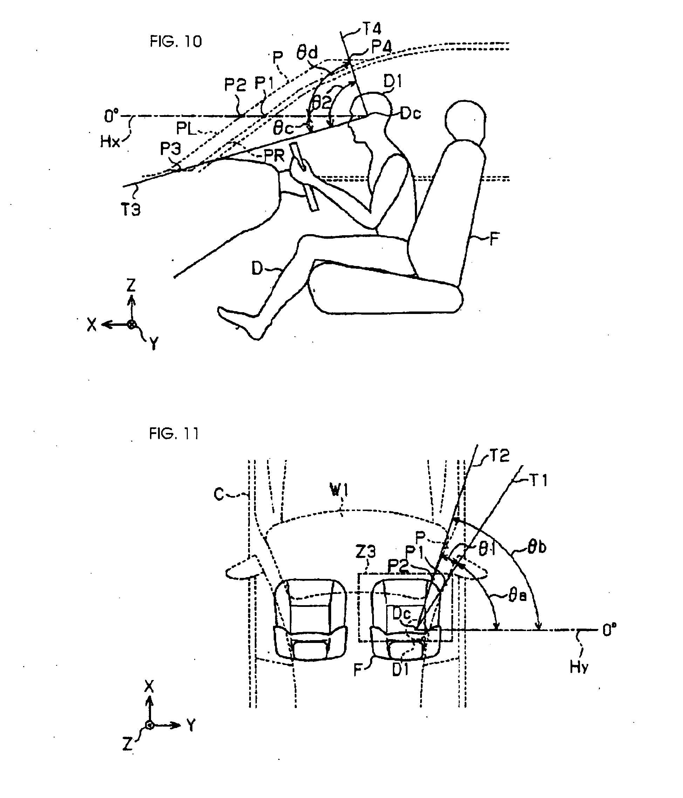

Next, the control section 10 calculates angles θ1 and θ2 which are angles to a blind spot arising because of the presence of the pillar P on the basis of the coordinates of the center point Dc. More specifically, as shown in FIGs. 9 and FIG. 10, tangent lines T1 through T4 of the coordinates of the center point Dc of the head position D I and the pillar P, T1 and T2 are on the horizontal direction (FIG. 9) and T3 and T4 are on vertical direction (FIG. 10), are calculated and an angle between the tangent lines T1 and T2 and an angle between the tangent lines T3 and T4 are calculated.

The tangent lines T1 and T2 on the horizontal direction are calculated as follows. As shown in FIG. 10, the control section 10 finds contact points P1 and P2 which are on the long side of the pillar P and at the same level of the center point Dc of the head position D 1 on the basis of pillar shape data 41 stored in the ROM 12. Then, lines which are connected between the contact points P1/P2 and the center point Dc are the tangent lines T1/T2 as shown in FIG. 9. Note that, to calculate the tangent lines T1 and T2, the contact points P1 and P2 do not have to be at the same level of the center point Dc. For example, a midpoint on the longer side of the pillar P may be set as the contact point P1/P2.

Further, the control section 10 calculates the blind spot angle θ1 between the tangent lines T1 and T2 on the horizontal direction. The control section 10 sets a horizontal line Hy as a horizontal axis of the vehicle width direction (Y-direction) (the horizontal line is set as 0) and calculates an angle θa between the horizontal line Hy and the tangent line T1 (hereinafter referred to as minimum angle θa) and an angle θb between the horizontal line Hy and the tangent line T2 (hereinafter referred to as maximum angle θb).

Meanwhile, on the basis of the pillar shape data 41, the control section 10 calculates the tangent line T3 connecting the lowest point P3 of the pillar P and the center point Dc of the head position D1 and the tangent line T4 connecting the highest point P4 of the pillar P and the center point Dc of the head position D1 as shown in FIG. 10. Then the angle between the tangent line T3 and the tangent line T4 is the blind spot angle θ2 on the vertical direction. Further, the control section 10 sets a horizontal line Hx starting from the center point Dc to the X-direction as 0 degree and calculates an angle θc between the horizontal line Hx and the tangent line T3 (hereinafter referred to as minimum angle θc) and an angle θd between the horizontal line Hx and the tangent line T4 (hereinafter referred to as maximum angle θd).

After calculating the blind spot angles θ1 and θ2, the maximum angles θb and θd, and the minimum angles θa and θc, the control section 10 determines whether the maximum angle θb on the horizontal direction is less than a predetermined angle A (for example, 45 degrees) and whether the maximum angle θd on the vertical direction is equal to or greater than a predetermined angle B (for example, 15 degrees). Note that, the predetermined angles A and B may be set according to the structure of the vehicle C, so that the values of the angles A and B described above may be included but not limited to.

When the maximum angle θb < the predetermined angle A and the maximum angle θd ≥ the predetermined angle B, the driver D may looks to the right front direction of the vehicle C and the visual field of the driver may relatively large, so that the first camera 6 is operated to capture an image. Under any other conditions, the driver D may not see an area ahead in the right front direction but only the area near the vehicle C. Therefore, the second camera 7 captures the image of area ahead.

For example, as shown FIG. 9, when the head position D1 leans to forward and to right within the head moving range Z3, the maximum angle θb on the horizontal direction is equal to or greater than 45 degrees. Further, as shown in FIG. 10, when the head position D1 leans to forward and to right within the head moving range Z3, the maximum angle θd in the vertical direction is equal to or greater than 15 degrees. That is, the maximum angle θd in the vertical direction is equal to or greater than the predetermined angle B and the maximum angle θb in the horizontal direction is equal to or greater than the predetermined angle A, so that the control section 10 uses the second camera 7 to capture the image because the second camera 7 is located close to the head position D 1 which currently leans to forward and to right.

After capturing the image, the second camera 7 outputs image data G to the image processor 20 through the image data input section 22. The image processor 20 processes image data as described above, generates output data OD by using the mask pattern 40, and outputs the generated output data OD to the projector 4. As a result, when the head position D1 leans to forward and to right within the head moving range Z3, the image which connects to the real view from the front window W1 as seen from the driver's eyes may be displayed on the screen SC on the pillar P.

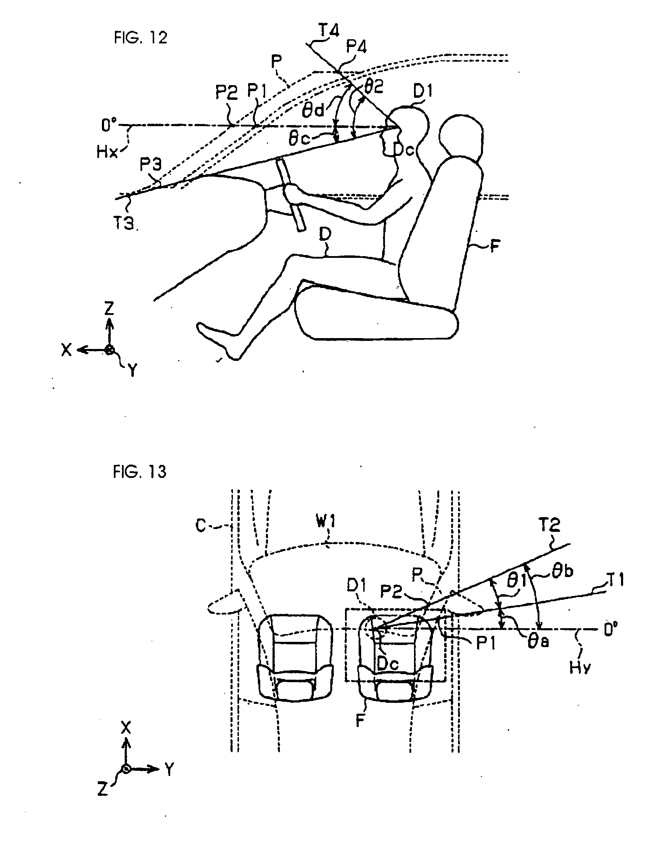

In the same way, for example, as shown in FIGs. 11 and 12, when the coordinates of the center point Dc of the head D1 leans to backward and to right within the head moving range Z3, the maximum angle θb in the horizontal direction is equal to or greater than the predetermined angle A (45 degrees) and the maximum angle θb in the vertical direction is less than the predetermined numbers of degree B (15 degrees). That is, the driver D looks ahead and the driver's view is similar to the view of the second camera 7. Therefore, the second camera 7 which is close to the head D 1 is activated.

As shown in FIG. 13, when the center point Dc of the head D 1 leans to forward and to left within the head moving range Z3, the maximum degree θb in the horizontal direction is less than the predetermined angle A (45 degrees) and the maximum angle θd in the vertical direction is equal to or greater than the predetermined angle B (15 degrees). In this case, the head D 1 of the driver D approaches the front window W1 in the length direction (X-direction) and is relatively low in the virtual direction (Z-direction) and is relatively far from the pillar P in the vehicle width direction (Y-direction). That is, the driver D peers at the area in the right front direction from the front window W1 because to avoiding the pillar P. The driver D may easily see obstacles in the right front direction and may even see an entire or a part of an obstacle which can not be seen when seated with leaning the driver's head back against the front seat F. Therefore, the control section 10 activates the first camera 6 which takes the picture of area mainly in the right front direction and the right direction.

After capturing the image, the first camera 6 outputs image data G to the image processor 20 through the image data input section 22. The image processor 20 converts image data G into coordinates, generates output data OD, and outputs the generated output data OD to the projector 4 as described above. Therefore, when the driver looks another vehicle and/or an obstacle located in the right front direction with a slouch, the vehicle and/or the obstacle may be projected on the screen SC.

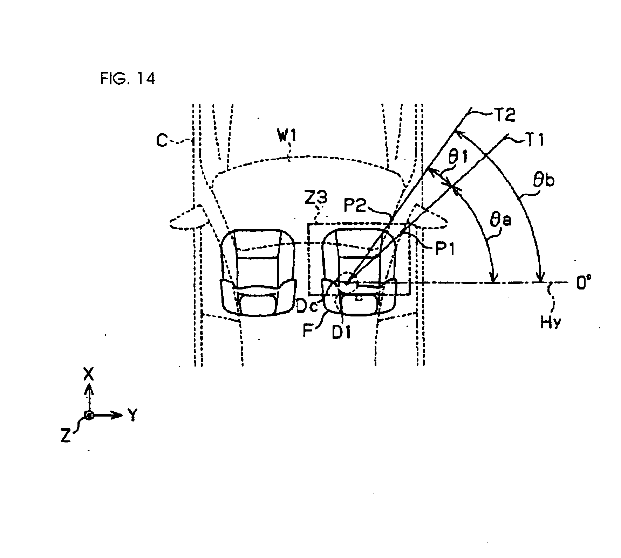

Further, as shown in FIG. 14, when the center point Dc of the head D 1 leans to backward and to left within the head moving range Z3, the maximum angle θb in the horizontal direction is equal to or greater than the predetermined angle A and the maximum angle θd in the vertical direction is less than the predetermined angle. In this case, the driver D mainly looks ahead, so that the second camera 7 is activated.

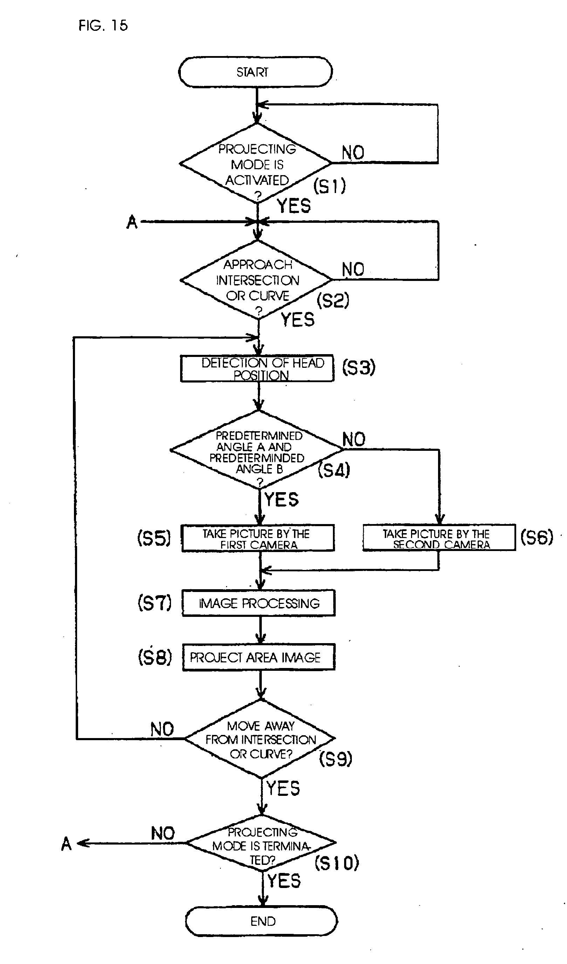

Next, procedures in the current embodiment will be described with reference to FIG. 15. The control section 10 of the driving support unit 2 waits for starting of a projecting mode to project an area image on the inner side of the pillar P (Step S1). For example, when the touch panel and/or the operation switch 26 is operated and the control section 10 receives the request for starting the projecting mode through the external input I/F section 25, it is determined that the projecting mode should be started. Meanwhile, when the projecting mode is activated under the system initial condition, it may be determined that the projecting mode should be started on the basis of an on-signal from an ignition module (not shown).

When it is determined that the projecting mode should be started (Step S1=YES), the control section 10 determines whether the vehicle C approaches an intersection or a curve on the basis of road data of route data 16 or map drawing data 17 (Step S2). More specifically, when the control section 10 determines that the current position of the vehicle C approaches an intersection including T-shaped intersection or a curve which has a equal to or greater curvature than a predetermined curvature within a predetermined distance (for example, 200 m), it is determined that the vehicle C approaches the intersection or the curve.

When it is determined that the vehicle C approaches the intersection or the curve (Step S2=YES), the control section 10 detects the head position of the driver D by means of the position detecting sensors 8a through 8c (Step S3). The control section 10 obtains the relative distances L1 through L3 which are between each of the position detecting sensors 8a through 8c and the head D 1 through the sensor I/F section 23. Then the relative distances L 1 through L3 are compared with the head position coordinates table 11 a and the coordinates of the center point Dc of the head D 1 are specified.

Next, the control section 10 calculates the tangent lines T1 and T2 which are in the horizontal direction and the tangent lines T3 and T4 which are in the vertical direction by using the coordinates of the center point Dc as described above, and further calculates the blind spot angle θ1 in the horizontal direction and the blind spot angle θ2 in the vertical direction.

After calculating the blind spot angles θ1 and θ2, the control section 10 determines whether the maximum angle θb of the blind spot angle θ1 in the horizontal direction is less than the predetermined angle A and whether the maximum angle θd of the blind spot angle θ2 in the vertical direction is equal to or greater than the predetermined angle B (Step S4).

When it is determined that the maximum angle θb is equal to or greater than the predetermined angle A or that the maximum angle θd is less than the predetermined angle B (Step S4=NO), the driver D looks ahead or the driver D looks the area near the vehicle C in the right front direction of the vehicle C. Therefore, the control section 10 activates the second camera 7 because the view range of the second camera 7 is similar to the view range of the driver D at that time and the second camera 7 takes the image of the area Z2 in front of the vehicle C (Step S6). The second camera 7 outputs the image signal M to the image data input section 22. The image data input section 22 A/D converts the image signals M and outputs image data G to the image processor 20.

The image processor 20 processes image data G which was input from the image data input section 22 with adjusting at the center point Dc of the head D1 (Step S7). That is, it is not only to select the camera 6 or 7 according to the center point Dc but also to perform well known image processing such as coordinate conversion according to the center point Dc at that time to generate the image which is similar to the real view. The image processor 20 reads the mask pattern 40 from the ROM 12, reads pixel data of image data G for the image display section 40a of the mask pattern 40 and reads pixel data of the projector 4 according to the other area but not for displaying. Then the control section 10 generates output data OD.

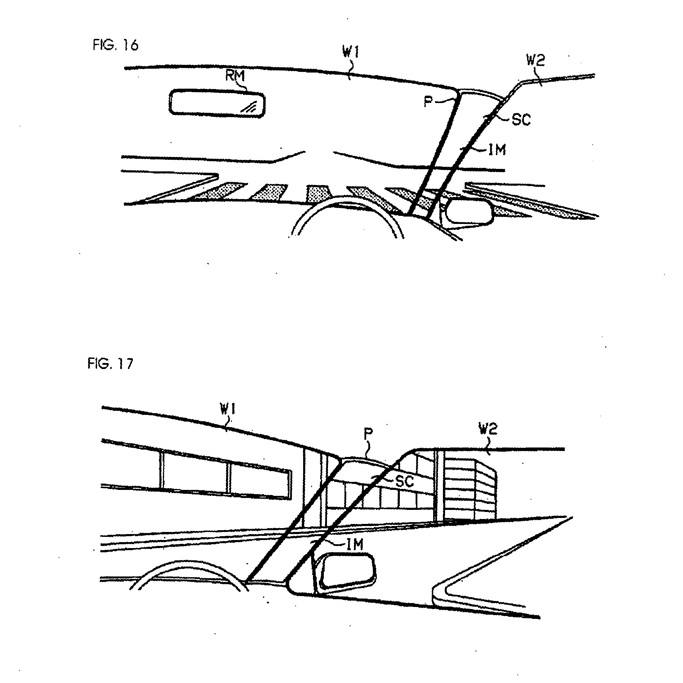

After generating output data OD, the image processor 20 outputs the output data OD to the projector 4 and the projector 4 D/A converts the output data OD and projects the area image on the screen SC on the pillar P (Step S8). As a result, as shown in FIG. 16, the area image IM is displayed on the screen SC. The area image IM in FIG. 16 is provided by the second camera 7 which captures the image of the area mainly in front of the vehicle C. Therefore, the real view from the front window W1 and the door window W2 looked by the driver D looking ahead and the area image IM are smoothly connected with each other.

When the area image IM is displayed on the screen SC, the control section 10 determines whether the vehicle C moves away from the intersection or the curve (Step S9). When it is determined that the vehicle C approaches or enter the intersection or the curve (Step S9=NO), the procedure returns to Step 3 and the control section 10 controls the position detecting sensors 8a through 8c and calculates the coordinates of the center point Dc of the head D1.

When the vehicle C arrives at the intersection, the driver D slouches forward to look down the road which is crossed to the traffic direction of the vehicle C, to check with or without another vehicle and/or a passenger. When the driver wants to turn right, the driver also checks the shape of the road which is crossed to the traffic direction of the vehicle C. In this case, the head D1 of the driver D is left away from the pillar and moved forward. As a result, the maximum angle θb of the blind spot angle θ1 is less than the predetermined angle A (45 degrees) and the maximum angle θd of the blind spot angle θ2 is equal to or greater than the predetermined angle B (15 degrees) (Step S4=YES). Therefore, the control section 10 activates the first camera 6 to capture the image of the side area Z1 because the view area of the first camera 6 is similar to the view area of the driver D at that time (Step S5). The first camera 6 outputs the image signal M to the image data input section 22 and the image data input section 22 A/D converts the image signal M and outputs the image data G to the image processor 20.

The image processor 20 performs image processing to the input image data G which is input from the image data input section 22 with adjusting the image data G to the center point Dc of the head D1 (Step S7) and generates output data OD. After generating output data OD, the image processor 20 outputs the output data OD to the projector 4 and the projector 4 D/A converts the output data OD and projects the area image on the screen SC on the pillar P (Step S8). As a result, as shown in FIG. 17, the area image IM is displayed on the screen SC. The area image IM may include a road shape or an obstacle which the driver can not see with leaning the driver's back against the front seat F. Therefore, the real view from the front window W1 and the door window W2 looked by the driver D at that time and the area image IM are smoothly connected with each other.

When it is determined that the vehicle C moves away from the intersection or the curve (Step S9=YES), the control section 10 determines whether the projecting mode is terminated or not (Step S10). For example, when the touch panel or the operation switch 26 is operated or when an off-signal of the ignition module is input, the control section 10 determines that the projecting mode is terminated (Step S10=YES) and the procedure is terminated. When it is determined that the projecting mode has not been terminated yet (Step S10=NO), the procedure returns to Step S2 and the procedure is suspended until the vehicle C approaches an intersection or a curve. When the vehicle C approaches the intersection or the curve (Step S2=YES), the procedure described above is repeated.

According to the embodiment described above, following advantages may be provided.

1) According to the current embodiment, the control section 10 of the driving support unit 2 calculates the coordinates of the center point Dc of the head D1 of the driver D on the basis of the first through third position detecting sensors 8a through 8c. Further, the blind spot angles θ1 and θ2 because of the presence of the pillar P are calculated on the basis of the position of the head D1. When the maximum angle θb of the blind spot angle θ1 is less than the predetermined angle A (45 degrees) and when the maximum angle θd of the blind spot angle θ2 is equal to or greater than the predetermined angle B (15 degrees), the control section 10 activates the first camera 6 to capture the image of the side area of the vehicle C. Under any condition other than the condition described above, the control section 10 activates the second camera 7 to capture the image of the side area of the vehicle C. Then, the control section 10 performs image processing to image data G provided by the first camera 6 or the second camera 7 with adjusting to the coordinates of the center point Dc and outputs the generated output data OD to the projector 4. The projector 4 projects the output data OD on the screen SC on the inner side of the pillar P. Therefore, even when the driver D slouches forward to look down the right front area of the vehicle C or when the driver D is seated with leaning the driver's back against the front seat F, the suitable area image IM corresponding to the body position of the driver D may be displayed, so that the real view looked by the driver D at that time and the area image IM may be smoothly connected with each other and the driver D may drive safe.

2) According to the current embodiment, the control section 10 of the driving support unit 2 detects the coordinates of the center point Dc of the head D1 of the driver D. The blind spot angles θ1 and θ2 are calculated on the basis of the center point Dc, so that the relatively accurate maximum angle θb and the accurate minimum angle θc may be calculated.

3) According to the current embodiment, it is not only to select the first camera 6 or the second camera 7 in accordance with the body position of the driver D but also to convert coordinates of image data G which is input from the camera 6 or 7 by the image processor 20. Therefore, the real view from the front window W1 and the door window W2 looked by the driver D at that time and the area image IM may be smoothly connected with each other.

4) According to the current embodiment, the control section 10 calculates the maximum angle θb of the blind spot angle θ1 and the maximum angle θd of the blind spot angle θ2 on the basis of the coordinates of the center point Dc of the head D 1. Then the camera 6 or the camera 7 is selected depend on the maximum angle θb and the maximum angle θd. That is, it may be possible to select the camera 6 or the camera 7 on the basis of the view area of the driver D (on the basis of the direction of the blind spot of the driver D), so that it may be possible to display the area image IM which is smoothly connecting to the real view.

Note that the embodiment described above may be modified as follows.

* According to the embodiment described above, the control section 10 determines whether the vehicle C approaches an intersection on the basis of route data 16 and whether the vehicle C approaches a curve whose curvature is equal to or greater than a predetermined curvature on the basis of map drawing data 17. However, it may be possible for the control section 10 to determine with or without such an intersection on the basis of map drawing data 17 or another data. Further, it may be possible for the control section 10 to determine with or without such a curve whose curvature is equal to or greater than the predetermined curvature on the basis of route data 16 or another data.

* According to the embodiment described above, the position detecting sensors 8a through 8c are attached near the front mirror (room mirror) RM, on the upper side of the door window W2, and on the head rest FH of the front seat F. However, the position detecting sensors 8a through 8c may be attached on another place. Further, although three sensors detect the position of the head D1, two sensors or more than four sensors may be used. Further, although the ultrasonic sensors are used as the position detecting sensors 8a through 8c, an infrared sensor or another type of sensor may be used instead.

* According to the embodiment described above, the ultrasonic sensors as the position detecting sensors 8a through 8c detect the head D1 of the driver D. However, a camera attached near the driver's seat may capture the image of the area surrounding the driver's seat and the head position of the driver may be detected by performing image processing such as feature-point matching detection or pattern matching processing.

* According to the embodiment described above, the relative distances L1 through L3 are compared with the head position coordinates table 11 a and the coordinates of the center point Dc of the head D 1 is calculated. However, the control section 10 may calculate the position of the center point Dc of the head D1 on the basis of the relative distances L 1 through L3 without using the head position coordinates table 11 a.

* According to the embodiment described above, a table in which the coordinates of the center point Dc of the head D1 are related with the maximum angle θb in the horizontal direction and the maximum angle θd in the vertical direction may be stored, for example, in the main memory 11. In this case, when the coordinates of the center point Dc is calculated, the maximum angle θb and the maximum angle θd may be calculated on the basis of the table.

* According to the embodiment described above, the image data input section 22 generates image data G. However, image data G may be generated by being A/D converted by the camera 6 or the camera 7.

* According to the embodiment described above, the first camera 6 is activated when the maximum angle θd of the blind spot angle θ1 in the horizontal direction is less than the predetermined angle A and when the maximum angle θd of the blind spot θ2 in the vertical direction is equal to or greater than the predetermined angle B. However, it may be determined only whether the maximum angle θb of the blind spot angle θ1 in the horizontal direction is less than the predetermined angle A. When the maximum angle θb is less than the predetermined angle A, the camera 6 may be used to capture the image. Meanwhile, it may be determined only whether the maximum angle θd of the blind spot angle θ2 in the vertical direction is equal to or greater than the predetermined angle B. When the maximum angle θd is equal to or greater than the predetermined angle B, the first camera 6 may be used to capture the image.

* According to the embodiment described above, it may be determined whether the first camera 6 or the second camera 7 should be used depend on the sizes of the blind spot angles θ1 and θ2.

* According to the embodiment described above, the blind spot angles θ1 and θ2 for the driver D are calculated on the basis of the coordinates of the center point Dc of the head D1. However, either of the first camera 6 or the second camera 7 may be selected depend on where the center point Dc is located within the head moving range Z3. For example, When the driver D slouches forward, it is determined that the head D1 is located in the left front direction within the head moving range Z3, so that the first camera 6 may be activated. Meanwhile, when it is determined that the head D1 is located in the right front direction or the backward direction within the head moving range Z3, the second camera 7 may be activated. As a result, the throughput of the driving support unit 2 may be reduced and the area image IM which is smoothly connecting with the real view from the driver D's eyes may be relatively easily displayed even though the real view keeps changing according to the movement of the vehicle C.

* According to the embodiment described above, there are two cameras, the camera 6 and the camera 7, attached in the vehicle C. However, three or more than three camera may be mounted. Even in this case, when one camera is selected among the cameras to capture the image on the basis of the blind spot angle θ1 and θ2 of the driver D or the center point Dc of the head D1, the suitable area image IM corresponding to the posture of the driver may be displayed.

* According to the embodiment described above, the area image IM is displayed on the pillar P in the driver's seat side (the right front pillar in the embodiment). However, the area image IM may be displayed on the other pillar on the other side of the driver's seat. Likewise, the coordinates of the head D1 and the blind spot angles θ because of the presence of the pillar are calculated and it may be determined which camera should be activated depend on the calculated angles.

* According to the embodiment described above, the projector 4 projects the area image IM on the inner side of the pillar P. However, it may be possible to attach a flat-screen display on the inner side of the pillar P and the image processor 20 may output the output data OD on the display.

It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A driving support method for capturing an image of an area which is hidden as a blind spot (θ1,θ2) of a driver of a vehicle arising because of a presence of a pillar (P) of the vehicle (C) using a plurality of imaging means (6, 7) attached on the vehicle (C) which capture images of different areas (Z1, Z2), where each of the different areas includes the blind spot (θ1,θ2) and for displaying the image provided by the imaging means (6, 7) on an inner side of the pillar (p), comprising:
detecting a position of the driver (D) who is seated on a driver's seat of the vehicle (C);
selecting one of the plurality of imaging means (6, 7) to capture an image in accordance with the position of the driver (D); and
displaying an image on the inner side of the pillar (P) on the basis of an image signal (M) which is input from the selected imaging means (6, 7).

2. A driving support apparatus (2) for capturing an image of an area which is hidden as a blind spot (θ1,θ2) of a driver (D) of a vehicle (C) arising because of a presence of a pillar (P) of the vehicle (C) using imaging means (6, 7) attached on the vehicle (C) and for displaying an image provided by the imaging means (6, 7) on an inner side of the pillar (P), comprising:
detecting means (10) for detecting a position of the driver (D) who is seated on a driver's seat in the vehicle (C);
**characterized by**
selecting means (10) for selecting one of a plurality of imaging means (6, 7) which capture image of different areas (Z1, Z2), where each of the different areas includes the blind spot (θ1,θ2) in accordance with the position of the driver (D) among the plurality of the imaging means (6, 7);
image signal obtaining means (22) for inputting an image signal (M) from the selected imaging means (6, 7); and
output control means (20) for displaying an image of the blind spot arising because of the presence of the pillar (P) on the inner side of the pillar (P) in the vehicle (C) on the basis of the image signal (M) which is input from the imaging means (6, 7).

3. The driving support apparatus of claim 2, further comprising
angle calculating means (10) for calculating an angle of the blind spot arising because of the presence of the pillar (P) on the basis of the position of the driver (D) detected by the detecting means (10),
the selecting means (10) being adapted for selecting one of the imaging means (6, 7) in accordance with the blind spot angle of the driver (D) among a plurality of the imaging means (6, 7) which capture images of different areas.

4. The driving support apparatus according to claim 3, wherein:
the selecting means is adapted to select, provided that a maximum angle of the blind spot angle arising because of the presence of the pillar in a vehicle width direction relative to a horizontal axis is less than predetermined numbers of degrees, first imaging means to capture an image which mainly includes a front side area of the vehicle, and to select, provided that the maximum angle is equal to or greater than the predetermined numbers of degrees, second imaging means to capture an image which mainly includes the area in front of the vehicle.

5. The driving support apparatus according to any one of claims 2 through 4, wherein
the detecting means is adapted to detect coordinates of a head of the driver.

6. The driving support apparatus according to any one of claims 2 through 5, further comprising
image processing means for performing image processing on the image signal which is input from the imaging means in accordance with the position of the driver.

7. The driving support means according to any of claims 2 to 6, wherein the different areas comprise an area (Z1) to the front and the pillar side of the vehicle (C) and an area (Z2) mainly in front of the vehicle (C).

8. The driving support means according to any of claims 2 to 7, wherein
the image signal obtaining means (22) is adapted to activate the selected imaging means for inputting an image signal (M) from the activated imaging means.

## Patentansprüche

1. Fahrunterstützungsverfahren zum Erfassen eines Bildes eines Bereichs, der als ein toter Winkel (θ1,θ2) eines Fahrers eines Fahrzeugs, der aufgrund einer Gegenwart einer Säule (P) des Fahrzeugs (C) auftritt, versteckt ist, das eine Mehrzahl von Bilderfassungsmitteln (6, 7), die an dem Fahrzeug (C) angebracht sind und die Bilder von verschiedenen Bereichen (Z1, Z2), von denen jeder den toten Winkel (θ1, θ2) enthält, erfassen, benutzt, und zum Anzeigen des Bildes, das von den Bilderfassungsmitteln (6, 7) geliefert wird, auf einer Innenseite der Säule (p), enthaltend
Detektieren einer Position des Fahrers (D), der auf einem Fahrersitz des Fahrzeugs (C) sitzt, Auswählen eines aus der Mehrzahl von Bilderfassungsmitteln (6, 7) zum Erfassen eines Bildes entsprechend der Position des Fahrers (D), und
Anzeigen eines Bildes auf der Innenseite der Säule (P) auf Basis eines Bildsignals (M), das von dem ausgewählten Bilderfassungsmittel (6, 7) eingegeben wird.

2. Fahrunterstützungsvorrichtung (2) zum Erfassen eines Bildes eines Bereichs, der als ein toter Winkel (θ1,θ2) eines Fahrers (D) eines Fahrzeugs (C), der aufgrund einer Gegenwart einer Säule (P) des Fahrzeugs (C) auftritt, versteckt ist, die Bilderfassungsmittel (6, 7), die an dem Fahrzeug (C) angebracht sind, benutzt, und zum Anzeigen eines Bildes, das von den Bilderfassungsmitteln (6, 7) geliefert wird, auf einer Innenseite der Säule (P), mit
einem Detektiermittel (10) zum Detektieren einer Position des Fahrers (D), der auf einem Fahrersitz in dem Fahrzeug (C) sitzt,
**gekennzeichnet durch**
ein Auswählmittel (10) zum Auswählen eines aus einer Mehrzahl von Bilderfassungsmitteln (6, 7), die Bilder von verschiedenen Bereichen (Z1, Z2), von denen jeder den toten Winkel (θ1, θ2) enthält, erfassen, entsprechend der Position des Fahrers (D) aus der Mehrzahl der Bilderfassungsmittel (6, 7),
ein Mittel (22) zum Erhalten eines Bildsignals zum Eingeben eines Bildsignals (M) von dem ausgewählten Bilderfassungsmittel (6, 7), und
ein Ausgabesteuermittel (20) zum Anzeigen eines Bildes des toten Winkels, der aufgrund der Gegenwart der Säule (P) auftritt, auf der Innenseite der Säule (P) in dem Fahrzeug (C) auf Basis des Bildsignals (M), das von dem Bilderfassungsmittel (6, 7) eingegeben wird.

3. Fahrunterstützungsvorrichtung nach Anspruch 2, das weiter aufweist
ein Winkelberechnungsmittel (10) zum Berechnen eines Winkels eines toten Winkels, der aufgrund der Gegenwart der Säule (P) auftritt, auf der Basis der Position des Fahrers (D), die von dem Detektiermittel (10) detektiert wird,
das Auswählmittel (10), das zum Auswählen eines der Bilderfassungsmittel (6, 7) entsprechend dem Winkel des toten Winkels des Fahrers (D) aus einer Mehrzahl der Bilderfassungsmittel (6, 7), die Bilder von verschiedenen Bereichen erfassen, angepasst ist.

4. Fahrunterstützungsvorrichtung nach Anspruch 3, bei der
das Auswählmittel zum Auswählen, vorausgesetzt, dass ein Maximalwinkel des Winkels des toten Winkels, der aufgrund der Gegenwart der Säule auftritt, in einer Breitenrichtung des Fahrzeugs relativ zu einer Horizontalachse kleiner ist als vorbestimmte Gradzahlen, eines ersten Bilderfassungsmittels zum Erfassen eines Bildes, das hauptsächlich einen vorderen Seitenbereich des Fahrzeugs enthält, und zum Auswählen, vorausgesetzt, dass der Maximalwinkel gleich oder größer als die vorbestimmten Gradzahlen ist, eines zweiten Bilderfassungsmittels zum Erfassen eines Bildes, das hauptsächlich den Bereich vor dem Fahrzeug enthält.

5. Fahrunterstützungsvorrichtung nach einem der Ansprüche 2 bis 4, bei der
das Detektiermittel zum Detektieren von Koordinaten eines Kopfs des Fahrers angepasst ist.

6. Fahrunterstützungsvorrichtung nach einem der Ansprüche 2 bis 5, das weiter aufweist
ein Bildverarbeitungsmittel zum Durchführen einer Bildverarbeitung des Bildsignals, das von dem Bilderfassungsmittel entsprechend der Position des Fahrers eingegeben wird.

7. Fahrunterstützungsvorrichtung nach einem der Ansprüche 2 bis 6, wobei die verschiedenen Bereiche einen Bereich (Z1) zu der Vorderseite und der Säulenseite des Fahrzeugs (C), und einen Bereich (Z2) hauptsächlich vor dem Fahrzeug (C) aufweisen.

8. Fahrunterstützungsvorrichtung nach einem der Ansprüche 2 bis 7, wobei das Mittel (22) zum Erhalten eines Bildsignals zum Aktivieren des ausgewählten Bilderfassungsmittels zum Eingeben eines Bildsignals (M) von dem aktivierten Bilderfassungsmittel angepasst ist.

## Revendications

1. Procédé de support de conduite pour capturer une image d'une zone qui est cachée comme un angle mort (θ₁, θ₂) d'un conducteur d'un véhicule se produisant à cause d'une présence d'un montant (P) du véhicule (C) en utilisant une pluralité de moyens de capture d'image (6, 7) fixés sur le véhicule (C), qui capturent des images de différentes zones (Z1, Z2), où chacune des différentes zones inclut l'angle mort (θ₁, θ₂) et pour visualiser l'image fournie par les moyens de capture d'image (6, 7) sur un côté intérieur du montant (P), comprenant :
la détection d'une position du conducteur (D) qui est assis sur un siège du conducteur du véhicule (C) ;
la sélection de l'un de la pluralité de moyens de capture d'image (6, 7) pour capturer une image en fonction de la position du conducteur (D) ; et
la visualisation d'une image sur le côté intérieur du montant (P) sur la base d'un signal d'image (M) qui est appliqué en entrée par le moyen de capture d'image sélectionné (6, 7).

2. Dispositif de support de conduite (2) pour capturer une image d'une zone qui est cachée comme un angle mort (θ₁, θ₂) d'un conducteur (D) d'un véhicule (C) se produisant à cause d'une présence d'un montant (P) du véhicule (C) en utilisant une pluralité de moyens de capture d'image (6, 7) fixés sur le véhicule (C) et pour visualiser l'image fournie par les moyens de capture d'image (6, 7) sur un côté intérieur du montant (P), comprenant :
des moyens de détection pour détecter une position du conducteur (D) qui est assis sur un siège du conducteur dans le véhicule (C) ;
**caractérisé par**
des moyens de sélection (10) pour sélectionner l'un de la pluralité de moyens de capture d'image (6, 7), qui capturent des images de différentes zones (Z1, Z2), où chacune des différentes zones inclut l'angle mort (θ₁, θ₂), en fonction de la position du conducteur (D) parmi la pluralité des moyens de capture d'image (6, 7) ;
des moyens d'obtention de signal d'image (22) pour appliquer en entrée un signal d'image (M) provenant du moyen de capture d'image sélectionné (6, 7) ; et
des moyens de commande de sortie (20) pour visualiser une image de l'angle mort se produisant à cause de la présence du montant (P) sur le côté intérieur du montant (P) dans le véhicule (C) sur la base du signal d'image (M) qui est appliqué en entrée par le moyen de capture d'image (6, 7).

3. Dispositif de support de conduite selon la revendication 2, comprenant en outre
des moyens de calcul (10) pour calculer un angle de l'angle mort se produisant à cause de la présence du montant (P) sur la base de la position du conducteur (D) détectée par les moyens de détection (10),
les moyens de sélection (10) étant adaptés pour sélectionner l'un de la pluralité des moyens de capture d'image (6, 7) en fonction de l'angle de l'angle mort du conducteur (D) parmi la pluralité des moyens de capture d'image (6, 7) qui capturent des images de différentes zones.

4. Dispositif de support de conduite selon la revendication 3, dans lequel :
les moyens de sélection sont adaptés pour sélectionner, à condition qu'un angle maximum de l'angle mort se produisant à cause de la présence du montant dans une direction de largeur du véhicule par rapport à un axe horizontal soit inférieur à des nombres de degrés prédéterminés, un premier moyen de capture d'image pour capturer une image qui inclut principalement une zone latérale frontale du véhicule, et pour sélectionner, à condition que l'angle maximum soit égal ou supérieur aux nombres de degrés prédéterminés, un deuxième moyen de capture d'image pour capturer une image qui inclut principalement la zone à l'avant du véhicule.

5. Dispositif de support de conduite selon l'une quelconque des revendications 2 à 4, dans lequel les moyens de détection sont adaptés pour détecter des coordonnées de la tête du conducteur.

6. Dispositif de support de conduite selon l'une quelconque des revendications 2 à 5, comprenant en outre
des moyens de traitement d'image pour effectuer un traitement d'image sur le signal d'image qui appliqué en entrée par le moyen de capture d'image en fonction de la position du conducteur.

7. Dispositif de support de conduite selon l'une quelconque des revendications 2 à 6, dans lequel les zones différentes comprennent une zone (Z1) à l'avant et sur le côté du montant du véhicule (C) et une zone (Z2) principalement à l'avant du véhicule (C).

8. Dispositif de support de conduite selon l'une quelconque des revendications 2 à 7, dans lequel les moyens d'obtention de signal d'image (22) sont adaptés pour activer le moyen de capture d'image sélectionné pour appliquer en entrée un signal d'image (M) provenant du moyen de capture d'image sélectionné.
